# EUROPÄISCHE PATENTSCHRIFT

(11) **EP 0 385 248 B1**
(45) Veröffentlichungstag und Bekanntmachung des Hinweises auf die Patenterteilung: **12.05.1993**
(21) Anmeldenummer: 90103319.1
(22) Anmeldetag: 21.02.1990
(51) Int. Cl.: C09C 1/00

(54) **Grauschwarze Einschlusspigmente und Verfahren zu ihrer Herstellung**
Grey-black mixed-phase pigments and process for manufacturing them
Pigments à phases mixtes d'un noir grisâtre et procédé de préparation

(30) Priorität: 03.03.1989 DE 3906819
(43) Veröffentlichungstag der Anmeldung: 05.09.1990
(73) Patentinhaber: DEGUSSA AKTIENGESELLSCHAFT, 60311 Frankfurt (DE)
(72) Erfinder: Speer, Dietrich, Dr., D-6450 Hanau 9 (DE); Kiss, Akos, Dr., D-8755 Wasserlos (DE); Kleinschmit, Peter, Dr., D-6450 Hanau (DE)

(56) Entgegenhaltungen:
- DE-C- 2 143 525
- FR-A- 2 183 824
- FR-A- 2 245 741

## Beschreibung

Die Erfindung betrifft grauschwarze Einschlußpigmente auf der Basis von Zirkoniumsilikat als Hüllsubstanz, in die farbige Verbindungen als diskrete Phase eingeschlossen sind und ein Verfahren zur Herstellung dieser Einschlußpigmente.

Einschlußpigmente sind beispielsweise aus der DE-PS 23 12 535 bekanntgeworden. Sie bestehen aus durchsichtigen Kristallen von glasurstabilen Substanzen, wie beispielsweise Zirkoniumsilikat, Zirkoniumoxid oder Zinnoxid, in die anorganische, wasserfreie, farbige Verbindungen als diskrete Phase eingeschlossen sind. Als farbige Verbindungen werden Thenardsblau, Titangelb und insbesondere Cadmiumgelb und Cadmiumrot genannt. Bekannt ist auch das Zirkoneisen-Rosa mit Fe₂O₃-Einschlüssen in einer Zirkoniumsilikathülle. Die Herstellung dieser Einschlußpigmente erfolgt durch Erhitzen der Hüllsubstanzen bzw. deren Ausgangsprodukte und der einzuschließenden farbigen Substanzen, bzw. deren Ausgangsprodukte in Anwesenheit von Mineralisatoren auf Temperaturen bis 1200° C. Allerdings hat es sich herausgestellt, daß mit diesem Verfahren nicht alle denkbaren farbigen Verbindungen in die Hüllsubstanzen in nennenswerter Ausbeute eingeschlossen werden können.

Die Palette der Grauschwarzfarben ist nicht sehr groß. Man erhält solche Farbkörper im wesentlichen aus Eisenoxiden und Chromoxiden, gegebenenfalls in Verbindung mit anderen Oxiden, wie z.B. Manganoxid, Kupferoxid, Nickeloxid oder Kobaltoxid. Grauschwarze Einschlußpigmente sind bisher nicht bekannt geworden.

Es war daher Aufgabe der vorliegenden Erfindung grauschwarze Einschlußpigmente aus farblosen Kristallen aus Zirkoniumsilikat, in welchen farbige Verbindungen als diskrete Phase eingeschlossen sind, zu finden und ein Verfahren zur Herstellung dieser Einschlußpigmente zu entwickeln, mit dem eine relativ hohe Ausbeute erzielbar ist.

Diese Aufgabe wird erfindungsgemäß dadurch gelöst, daß als farbige Verbindungen kristalline Eisentitanate der Zusammensetzung FeTiO₃ eingeschlossen sind.

Diese Pigmente zeigen eine grauschwarze Farbe, wobei unterschiedliche Farbnuancen durch unterschiedliche Einschlußmengen, Teilchenformen und Teilchengrößen der eingeschlossenen Kristallite erhalten werden können.

Die grauschwarzen Einschlußpigmente sind erhältlich durch Glühen eines zuvor gemahlenen Gemisches aus Zirkoniumoxid, Siliziumoxid und Ausgangsverbindungen der einzuschließenden farbgebenden Verbindungen in Anwesenheit von Mineralisatoren bei 800 bis 1300 °C, wobei das Verfahren dadurch gekennzeichnet ist, daß man Zirkoniumoxide mit einer Korngrößenverteilung (D50-Wert) von vorzugsweise 6 bis 10 µm und einer spezifischen Oberfläche von 2 bis 5,2 m²/g verwendet und als Ausgangsverbindungen der einzuschließenden farbgebenden Verbindung Eisen- und Titanoxide oder bei höheren Temperaturen unter reduzierenden Bedingungen Oxide bildende Eisen- und Titanverbindungen einsetzt und das verdichtete Gemisch unter reduzierenden Bedingungen 0,5 bis 8 Stunden glüht.

Als Eisen- und Titanverbindungen werden entweder die Oxide, wie z. B. FeO, Fe₂O₃, Fe₃O₄ und TiO₂ eingesetzt, oder Verbindungen, die bei höheren Temperaturen unter reduzierenden Bedingungen Oxide bilden, wie z. B. Titanylverbindungen. Prinzipiell kann auch Eisentitanat der Formel FeTiO₃ direkt eingesetzt werden, soweit solche Produkte in ausreichender Feinheit zur Verfügung stehen. Als Mineralisatoren verwendet man üblicherweise Alkali- und Erdalkalihalogenide, vorzugsweise Alkalifluoride oder Erdalkalifluoride und Alkalisilikofluoride.

Man erhält so grauschwarze Einschlußpigmente, die FeTiO₃-Einschlüsse aufweisen. Die Ausbeuten an verwertbaren Pigmenten liegen bei 90% und höher. Vorzugsweise liegt die mittlere Teilchengröße der Einschlußpigmente im Bereich von 5 bis 10 µm. Die farbgebenden, vollständig von der ZrSiO₄-Kristallhülle umgebenen FeTiO₃-Einschlüsse weisen eine wesentlich geringere Teilchengröße - im allgemeinen unter 1 µm - auf.

Vorzugsweise werden feinteilige Eisenoxide (Fe₂O₃) mit D50-Werten von 0,2 bis 0,7 µm und Oberflächen von 13 bis 24 m²/g (wie bei ZrO₂ geometrisch aus der Kornverteilung ermittelt) eingesetzt. Als Ti-Verbindung wird vorzugsweise Titandioxid, insbesondere möglichst feinteiliges - besonders unter 1 µm - Titandioxid eingesetzt. Es ist von besonderem Vorteil, wenn pyrogene Titanoxide verwendet werden, insbesondere Gemische aus Anatas und Rutil; pyrogenes TiO₂ weist herstellungsbedingt oft eine Primärteilchengröße um 20 bis 30 nm auf.

Zirkonoxid und Siliziumdioxid werden im wesentlichen in äquivalenten Mengen eingesetzt. Das zu glühende Gemisch wird vor dem Glühprozeß gemahlen, etwa in einer Kugelmühle oder anderen Intensivmühlen. Das Glühen kann in üblichen Öfen, wie beispielsweise in Stempel-, Kammer- oder Durchlauföfen erfolgen. Die Aufheizrate beträgt vorzugsweise 800 bis 1100 °C pro Stunde, jedoch kann die Aufheizrate auch unter 800 oder über 1100 °C liegen. Bei einer Glühtemperatur im besonders bevorzugten Bereich von 1000 bis 1200 °C ist eine Glühdauer von 1 bis 2 Stunden meist ausreichend.

Die neuen grauschwarzen Einschlußpigmente eignen sich zur Einfärbung von Glasuren. Nicht-umhüllte Eisentitanate sind demgegenüber nicht glasurstabil, d. h. sie lösen sich bei der Glasbildung auf.

Folgende Beispiele sollen das erfindungsgemäße Verfahren näher erläutern:
1. Eine Mischung aus 25 g Zirkoniumoxid (D50-Wert = 7,6 µm; Oberfläche = 3,1 m²/g), 13,5 g Siliziumdioxid, 3,5 g Kaliumchlorid, 2,5 g Magnesiumfluorid, 1,5 g Natriumhexafluorsilikat, 5 g Eisen(III)-oxid und 2,5 g pyrogenes Titandioxid mit ca. 30 Gew.% Rutilgehalt wird nach 30-minütiger Mahlung mit einer Aufheizrate von 1000° C/h und unter Abdeckung mit Zucker auf 1100° erhitzt und dort 1 Stunde geglüht. Es entsteht ein grauschwarzes Produkt, bestehend aus FeTiO₃-Kristallen, eingeschlossen in Zirkoniumsilikat. Ausbeute 95 %.
2. Eine Mischung wie in Beispiel 1, wobei das Zirkoniumoxid einen D50-Wert von 9,3 µm und eine spezifische Oberfläche von 2,2 m²/g aufweist, wird mit 900° C/h auf 1200° C erhitzt und 1 Stunde geglüht. Man erhält ebenfalls ein grauschwarzes Produkt. Ausbeute 92 %.
3. Ein analoges Produkt wie in Beispiel 1 erhält man, wenn man Zirkoniumoxid mit einem D50-Wert von 6,6 µm und einer spezifischen Oberfläche von 5,2 m²/g einsetzt.

## Patentansprüche

1. Grauschwarze Einschlußpigmente, bestehend aus durchsichtigen Kristallen aus Zirkoniumsilikat, in welchen farbige Verbindungen als diskrete Phase eingeschlossen sind,
dadurch gekennzeichnet,
daß als farbige Verbindungen kristalline Eisentitanate der Zusammensetzung FeTiO₃ eingeschlossen sind.

2. Verfahren zur Herstellung von grauschwarzen Einschlußpigmenten gemäß Anspruch 1, durch Glühen eines zuvor gemahlenen Gemisches aus Zirkoniumoxid, Siliziumdioxid und Ausgangsverbindungen der einzuschließenden farbgebenden Verbindungen in Anwesenheit von Mineralisatoren bei 800 - 1300 °C,
dadurch gekennzeichnet,
daß man Zirkoniumoxide mit einer Korngrößenverteilung (D50-Wert) von 6 bis 10 µm und einer spezifischen Oberfläche von 2 bis 5,2 m²/g verwendet und als Ausgangsverbindungen der einzuschließenden farbgebenden Verbindung Eisen- und Titanoxide oder bei höheren Temperaturen unter reduzierenden Bedingungen Oxide bildende Eisen- und Titanverbindungen einsetzt und das verdichtete Gemisch unter reduzierenden Bedingungen 0,5 bis 8 Stunden glüht.

3. Verfahren nach Anspruch 2,
dadurch gekennzeichnet,
daß feinteilige Eisenoxide (Fe₂O₃) mit D50-Werten zwischen 0,2 und 0,7 µm und spezifischen Oberflächen zwischen 13 und 24 m²/g eingesetzt werden.

4. Verfahren nach Anspruch 2 oder 3,
dadurch gekennzeichnet,
daß pyrogene Titanoxide aus Anatas und Rutil eingesetzt werden.

5. Verfahren nach einem der Ansprüche 2 bis 4,
dadurch gekennzeichnet,
daß das Gemisch mit einer Aufheizrate von 800 bis 1100° C/h auf die Glühtemperatur gebracht wird.

## Claims

1. Grey-black inclusion pigments, consisting of transparent crystals of zirconium silicate in which coloured compounds are included as a discrete phase, characterised in that crystalline iron titanates of the composition FeTiO₃ are included as coloured compounds.

2. Process for the manufacture of grey-black inclusion pigments as claimed in claim 1 by calcination of a previously ground mixture of zirconium oxide, silicon dioxide and precursors of the colour-producing compounds that are to be included at 800-1300°C in the presence of mineralisers characterised in that zirconium oxides with a particle size distribution (D50 value) of 6 to 10 µm and a specific surface area of 2 to 2.5 m²/g and, as precursors of the colour-producing compound that is to be included, iron- and titanium oxides or, at higher temperatures under reducing conditions, oxide-forming iron- and titanium compounds, are used and the ground, compacted mixture is calcined under reducing conditions for 0.5 to 8 hours.

3. Process as claimed in claim 2, characterised in that finely divided iron oxides (Fe₂O₃) with D50 values of between 0.2 and 0.7 µm and specific surface areas of between 13 and 24 m²/g are used.

4. Process as claimed in claim 2 or 3, characterised in that pyrogenic titanium oxides consisting of anatase (octahedrite) and rutile and used.

5. Process as claimed in any of claims 2 to 4 characterised in that the mixture is brought to the calcination temperature at a heating rate of 800-1100°C/hour.

## Revendications

1. Pigmentd'inclusion grisnoirs,constitués de cristaux transparents de silicate de zirconium, dans lesquels sont insérés des composés colorés, comme phase discrète, caractérisés en ce que comme composés colorés sont insérés des titanates de fer cristallins de composition FeTiO₃.

2. Procédé de fabrication de pigments d'inclusion gris-noirs selon la revendication 1, par calcination d'un mélange moulu auparavant d'oxyde de zirconium, de dioxyde de silicium et de composés de base des combinaisons amenant la coloration à inclure, en présence de minéralisateurs, à 800-1300°C, caractérisé en ce qu'on utilise des oxydes de zirconium de répartition granulométrique (valeur D50) comprise entre 6 et 10 µm et de surface spécifique entre 2 et 5,2 m²/g et on met en jeu comme composés de base de la combinaison amenant la couleur à inclure des oxydes de fer et des oxydes de titane ou pour des températures plus élevées en conditions réductrices des composés de fer et des composés de titane donnant lieu à des oxydes et on calcine le mélange dans des conditions réductrices pendant 0,5 à 8 heures.

3. Procédé selon la revendication 2, caractérisé en ce que des oxydes de fer (Fe₂O₃) finement divisés, avec des valeurs D50 entre 0,2 et 0,7 µm et des surfaces spécifiques entre 13 et 24 m²/g sont mis en oeuvre.

4. Procédé selon les revendications 2 ou 3, caractérisé en ce que l'oxyde de titane obtenu par pyrogénation est mis en oeuvre à partir de l'anatase et du rutile.

5. Procédé selon l'une des revendications 2 à 4, caractérisé en ce que le mélange est amené à la température de calcination avec une vitesse de chauffage de 800 à 1100°C/h.
